# EUROPEAN PATENT APPLICATION

(11) **EP 0 935 928 A1**
(43) Date of publication of application: **18.08.1999**
(21) Application number: 99300764.0
(22) Date of filing: 02.02.1999
(51) Int. Cl.: A23L 1/32

(54) **Edible material having boiled egg yolk-like mouthfeel and food utilizing it**

(30) Priority: 06.02.1998 JP 2599198; 27.02.1998 JP 4693298
(71) Applicant: FUJI OIL COMPANY, LIMITED, Osaka-shi, Osaka-fu 542 (JP)
(72) Inventor: Nagao, Yasue, c/o Fuji Oil Co., Ltd, Yawara-mura, Tsukuba-gun, Ibaraki 300-24 (JP); Uesugi, Shigemi, c/o Fuji Oil Co.,Ltd., Yawara-mura, Tsukuba-gun, Ibaraki 300-24 (JP); Hirotsuka, Motohiko, c/o Fuji Oil Co., Ltd, Yawara-mura, Tsukuba-gun, Ibaraki 300-24 (JP)
(74) Representative: Baverstock, Michael George Douglas

(57) **Abstract**

An edible material comprising vegetable particles surrounded with intact walls of individually separated vegetable cells which is treated with a protein insolubilizer. The edible material has the pleasant mouthfeel of the egg yolk of a hard-boiled egg such as that of a mass of unbound fine granules which is not at all soggy and crumble to pieces upon eating.

## Description

The present invention relates to an edible material having boiled egg yolk-like mouthfeel and food utilizing it.

The egg yolk of a hard-boiled egg obtained by heating a whole egg with its eggshell, or a coagulated egg yolk obtained by heating only an egg yolk with its egg yolk membrane intact has a pleasant mouthfeel such as that of a mass of unbound fine granules which is not at all soggy and crumbles to pieces upon eating.

However, an egg yolk obtained by heat-coagulating it after breaking the egg yolk membrane has an elastic rubber-like mouthfeel and the above unique and pleasant mouthfeel of an egg yolk is lost.

As proposed in JP-B 49-48747, a coagulated egg having good mouthfeel can be produced by heat-coagulating a liquid egg yolk, crushing it, molding the crushed product and then, again, subjecting the product to heat treatment. However, there are drawbacks to this process. For example, the production steps are complicated because heating, crushing, molding and then heating need to be carried out. In addition, since only an egg yolk is used as the ingredient, the product has a high cholesterol content which is considered to be a cause of diseases due to increase in cholesterol such as hypertension.

Further, as proposed in JP-A 1-304866, a coagulated egg having pleasant mouthfeel similar to that of the egg yolk of a hard-boiled egg can be produced by mixing a liquid egg and a water-insoluble protein whose average particle size has been adjusted to 50 to 500 µm and heat-coagulating the mixture. However, the water-insoluble protein whose average particle size has been adjusted to 50 to 500 µm is necessarily very expensive.

The main object of the present invention is to provide an edible material having pleasant mouthfeel of the egg yolk of a hard-boiled egg such as that of a mass of unbound fine granules which is not at all soggy and crumbles to pieces upon eating.

This object as well as other objects and advantages of the present invention will become apparent to those skilled in the art from the following description.

As a result of the present inventors' intensive study, it has been found that the pleasant mouthfeel of the egg yolk of a hard-boiled egg can be obtained by treating vegetable particles contained in individually separated intact cells with a protein insolubilizer. That is, according to the present invention, there is provided an edible material comprising vegetable particles surrounded with intact walls of individually separated vegetable cells and treated or mixed with a protein insolubilizer.

The wording "vegetable particles surrounded with intact walls of individually separated vegetable cells" means particles obtained from any plants and vegetable edible materials containing cell walls, in particular, one or more legumes by cooking or heating and then straining them whilst keeping the cell walls contained in the plants and vegetable edible materials intact, i.e., without substantial breakage of cell walls (hereinafter referred to as vegetable particles (A)). For example, in the case of soybeans, the vegetable particles (A) can be obtained by subjecting soybeans to dehulling and removal of hypocotyls, soaking and heating the resultant soybeans, which are substantially free from swelling by water absorption, in hot water to which an alkali (e.g., a bicarbonate such as sodium bicarbonate, normally, in concentration of 0.01 to 4% by weight) has been added under the conditions of Log (Hr) + 0.333 Temp ≥ 2.4 [wherein Log (Hr) is a common logarithmic value of the soaking time and Temp is the soaking temperature (°C)], and crushing the soaked and heated beans whilst avoiding breakage of cell walls to prepare the desired vegetable particles (A). The vegetable particles (A) are not limited to water-absorbed materials and includes dried materials.

The "legumes" include all beans and peas such as soybeans, red beans, French beans, kidney beans, peas, broad beans, chick-peas and green peas and they may be in the form of hydrated or powder bean jam.

The means for crushing are not limited to specific ones, but stone or ceramic rolls are preferred. If the cell walls are broken, a product having both sufficient taste and mouthfeel is difficult to obtain. In any event, in the present invention, plants or vegetable materials are subjected to crushing by cooking or heating and then straining whilst keeping cell walls contained therein intact and, in the case of soybeans, after subjecting to dehulling and removal of hypocotyls, soybeans are soaked and heated and then crushed, for example, with stone or ceramic rolls whilst applying only low pressure (it is sufficient to set the gap between rolls so that both rolls just contact each other), thereby obtaining particles surrounded by intact cell walls of individually separated vegetable cells.

The vegetable particles (A) have average particle size of, preferably 50 to 500 µm, more preferably 100 to 200 µm.

The "average particle size" means the average size of particles measured by microscopic observation.

When the average particle size is too small, fine granular mouthfeel is lost and, when the particle size is too large, rough mouthfeel is caused. On the other hand, when the cell walls are broken, a product having desired mouthfeel and taste is difficult to obtain even when the average particle size is within the above range of 50 to 500 µm. However, insofar as the vegetable particles (A) surrounded with intact walls of individually separated vegetable cells comprise a substantial part of the product and insofar as the desired mouthfeel of the present invention can be obtained, the product may contain particles whose cell walls are broken, or insufficiently separated cells.

The amount of the vegetable particles (A) in the edible material of the present invention can be varied according to the particular use of the edible material. For obtaining hard-boiled egg yolk-type food, the edible material of the present invention contains preferably 20 to 70 %, more preferably 35 to 55 % in terms of the dry weight of the vegetable particles (A). When the amount of the vegetable particles (A) is too small, the fine granular mouthfeel is insufficient and the desired pleasant mouthfeel cannot be realized.

For obtaining spread-type food utilizing boiled eggs, the edible material of the present invention contains preferably 1 to 30 %, more preferably 5 to 20 % in terms of the dry weight of the vegetable particles (A). When the amount of the vegetable particles (A) is too large, spread-like mouthfeel is hardly obtained.

The "dry weight" means % by weight of a dry solids content obtained by conventional loss in weight on drying (at 105°C for 4 hours).

Examples of the protein insolubilizer include alkaline earth metals, acids, and organic solvents. As alkaline earth metals, examples are MgCl₂, CaSO₄, CaCO₃, MgSO₄, Ca(OH)₂, and calcium lactate. As the acids, examples are acetic acid, citric acid, malic acid, hydrochloric acid, lactic acid, tartaric acid, fumaric acid, and GDL (glucono-δ-lactone). The acid may be a dressing-type material containing at least one of these acids. Examples of a dressing-type product include dressing (including semi-solid-type, emulsion-type and separate liquid type), mayonnaise, salad dressing, and French dressing. As the organic solvent, an example is ethanol.

The treatment with the protein insolubilizer is carried out by mixing the vegetable particles (A) and the protein insolubilizer and, if necessary, molding and heating the mixture.

When an alkaline earth metal is used as the protein insolubilizer, the edible material of the present invention contains 0.4 to 4 %, preferably 1.2 to 2.0 % by weight of the alkaline earth metal based on the dry weight of the edible material.

When an acid is used as the protein insolubilizer the edible material of the present invention contains 1.0% by weight or less, preferably 0.5 % by weight or less of the acid based on the dry weight of the edible material. The acid is preferably one that can coagulate proteins and a preferred acid is acetic acid. After mixing with the vegetable particles (A) and the acid, if necessary, the mixture is molded and heated.

When an organic solvent is used as the protein insolubilizer, preferably 20 to 99% of the solvent is present during processing of the vegetable particles (A). For example, the dried vegetable particles (A) are treated with about 70 % of the solvent. The organic solvent is preferably ethanol.

In the present invention, no binder such as seed proteins, heat-coagulable proteins such as animal proteins or proteins coagulable by cooling is required for binding the individually separated vegetable particles (A) surrounded intact cell walls each other.

If necessary, the mixture of the vegetable particles (A) and the protein insolubilizer is heated, preferably at 80 to 100°C for 5 minutes or more. When the mixture is placed in a Petri dish of 9 cm diameter and then heated, heating with steam for about 30 minutes is suitable. When the mixture in the form of a large mass is heated, it is necessary to extend the heating time according to the volume of the mass.

If desired, other additives such as various colorants, flavors, salt, seasonings and spices can be added to the mixture. It is preferred to add a yellow colorant. The "yellow colorant" includes all naturally occurring and synthetic yellow colorants. For example, carotenoid pigments including carotenoids of the chemical formula: C₄₀H₅₆ such as β-carotene, γ-carotene and lycopene, as well as xanthophyll, zeaxanthin, cryptoxanthin, an rhodoxanthin, and capsanthin; animal and vegetable materials containing these calotenoid and other pigments such as pigments from gardenia, carrot, pumpkin, tomato, watermelon, corn, apricot, persimmon, pepper, spinach, Japanese globeflower (Kerria japonica), and egg yolk oil; synthetic dyes such as Food Yellow No. 4 (Tartrazine); are suitable. These colorants may be used alone or in combination.

When too much liquid seasoning or flavor is used in the edible material for producing hard-boiled egg yolk-type food molded to a certain degree, it may cause a viscous mouthfeel. Therefore, the amount of liquid is not more than 10 % by weight, preferably not more than 5 % by weight based on the total weight of the edible material.

The edible material of the present invention thus obtained has the pleasant mouthfeel of the egg yolk of a hard-boiled egg such as a mass of unbound fine granules which is not at all soggy and crumbles to pieces upon eating.

The edible material of the present invention can be eaten as it is. In addition, it can be used as a substitute for the egg yolk of a hard-boiled egg in various edible egg products. Furthermore, when producing an egg spread-type product such as an egg spread, the desired effect can be obtained directly by mixing the vegetable particles (A) with a dressing-type product such as mayonnaise, or a dressing which contains the protein insolubilizer.

The following examples, comparative examples and test example further illustrate the present invention in detail. However, they are not to be construed to limit the scope of the present invention. All the "percents" used in the examples are by weight.

### Example 1

Dehulled and hypocotyl-removed soybeans substantially free from swelling by water absorption were soaked in 5.5-fold volume of hot water (95°C) containing 0.3% sodium bicarbonate and heated at 95°C for 30 minutes. Then, water was drained from the soybeans and crushed with ceramic rolls (Ceramic Roll C-4 4/3 × 10 manufactured by Inoue Seisakusho, Japan) to obtain particles surrounded with intact walls of individually separated cells (the vegetable particles (A), this was confirmed by microscopic observation; in the other examples hereinafter, particles were confirmed by the same way) of soybeans (dry weight: 40 %). The vegetable particles (A) thus obtained (100 g) were mixed with MgCl₂·6H₂O (0.5 g) and a β-carotene preparation (Dunariella Carotene 25 Tokyo Tanabe manufactured by Tokyo Tanabe Seiyaku, Japan) (0.05 g) with stirring to obtain a clayey product. The product was steamed at 90°C or higher for 30 minutes and then cooled to obtain the desired edible material having pleasant mouthfeel of the egg yolk of a boiled egg.

The vegetable particles (A) content in the edible material was 39.8 % in terms of the dry weight.

### Example 2

According to the same manner as described in Example 1, the vegetable particles (A) were obtained. The vegetable particles (A) (100 g) were mixed with grain vinegar (acetic acid concentration: 4.2%) (3.0 g), salt (0.5 g) and Dunariella Carotene preparation (0.05 g) with stirring to obtain a clayey product. This product was steamed at 90°C or higher for 30 minutes and cooled to obtain the desired edible material having pleasant mouthfeel of the egg yolk of a boiled egg.

The vegetable particles (A) content in the edible material was 38.6 % in terms of the dry weight.

### Example 3

According to the same manner as described in Example 1, the vegetable particles (A) were obtained. The vegetable particles (A) (100 g) were mixed with ethanol (150 g), CaSO₄·2H₂O(0.5 g), salt (0.5 g) and Dunariella Carotene preparation (0.05 g) with stirring to obtain a clayey product. This product was steamed at 90°C or higher for 30 minutes and cooled to obtain the desired edible material having pleasant mouthfeel of the egg yolk of a boiled egg. It seemed that almost all the ethanol was evaporated and volatilized.

The vegetable particles (A) content in the edible material was 39.8 % in terms of the dry weight.

### Example 4

According to the same manner as described in Example 1, the vegetable particles (A) were obtained. The vegetable particles (A) (100 g) were mixed with CaSO₄·2H₂O (0.5 g), salt (0.5 g), grain vinegar (acetic acid concentration: 4.2 %) and Dunariella Carotene preparation (0.05 g) with stirring to obtain a clayey product. This product was steamed at 90°C or higher for 30 minutes and cooled to obtain the desired edible material having pleasant mouthfeel of the egg yolk of a boiled egg.

The vegetable particles (A) content in the edible material was 38.4 % in terms of the dry weight.

### Example 5

The edible material having pleasant mouthfeel of the egg yolk of a boiled egg obtained in Examples 1 to 4 was molded to a cylindrical shape of about 3 cm diameter and placed into a casing tube of 6.5 cm diameter. After the tube was further stuffed with egg white and sealed, the stuffed tube was heated in a hot water bath at 80°C with rotating to obtain an elongated egg-like food product having a uniform diameter.

The vegetable particles (A) contents in the food products are 19.2 to 19.9 % in terms of the dry weight.

### Example 6

The edible material having pleasant mouthfeel of the egg yolk of a boiled egg obtained in each of Examples 1 to 4 was cut into 5 mm cubes. Separately, egg white was cast into a mold and heat-coagulated. The coagulated egg white was cut into 5 mm cubes. The egg white cubes (200 g) were mixed with the above edible material cubes (200 g) and the mixture was dressed with salt (1 g), pepper (a little), mayonnaise (30 g) to obtain an egg spread.

The four (4) spreads thus obtained have pleasant mouthfeel similar to those of spreads produced by using the egg yolk of a hard-boiled egg instead of the edible materials and they can be subjected to mass production.

The vegetable particles (A) contents in the spreads were 17.8 to 18.4 % in terms of the dry weight.

### Example 7

According to the same manner as described in Example 1, the vegetable particles (A) were obtained. The vegetable particles (A) (60 g), mayonnaise (100 g) and Dunariella Carotene preparation (0.05 g) were placed in a food cutter and uniformly mixed therein. To this mixture was added diced egg white of boiled eggs (60 g) to obtain an egg spread product.

The vegetable particles (A) content in the spread product was 10.9 % in terms of the dry weight.

### Example 8

According to the same manner as described in Example 7, a non-cholesterol type egg spread product was obtained except that a non-cholesterol semi-solid dressing was used instead of mayonnaise.

The vegetable particles (A) content in the product was 10.9 in terms of the dry weight.

### Example 9

The amount of an egg spread product prepared by using real eggs was able to be extended without affecting the flavor of the product by uniformly mixing the vegetable particles (A) obtained in Example 1 (30 g) with an egg spread (100 g) prepared by using an egg, thereby reducing the cost.

The vegetable particles (A) content in the spread was 9.2 in terms of the dry weight

### Comparative Example 1

According to the same manner as described in Example 1, particles of soybeans were prepared except that pressure of 10 kg/cm² was applied to the gap between the ceramic rolls to crush the soybeans so that their cell walls were broken. As a result, a product having a soggy mouthfeel without any granular mouthfeel was obtained and an undesirable product was produced.

### Comparative Example 2

According to the same manner as described in Example 1, particles surrounded with intact walls of individually separated cells of soybeans were obtained. The particles (100 g) were mixed with Dunariella Carotene preparation (0.05 g) with stirring to obtain a clayey product. This product was steamed at 90°C or higher for 30 minutes and cooled. As a result, a product having soggy mouthfeel was obtained. In comparison with the product of Example 1, its mouthfeel was clearly inferior.

### Test Example

The following three (3) samples were provided.

### Test sample:

The edible material prepared in Example 1

### Control sample 1:

The product prepared in Comparative Example 2

### Control sample 2:

Only an egg yolk part of a whole egg was taken out and its egg yolk membrane was broken with stirring to obtain a liquid egg yolk. This was stuffed in a synthetic resin casing tube of 35 mm folding and sealed. The stuffed tube was heated in a hot water bath of 90°C or higher for 30 minutes and cooled to obtain a heat-coagulated egg yolk.

Mouthfeel of these samples was evaluated by an organoleptic test with 10 panelists.

The results are shown in Table 1. The results of Table 1 represent the number of panelists who chose the sample as that having the closest mouthfeel to that of the egg yolk taken out from a hard-boiled egg upon evaluation in a blind test.

**Table 1**

| | Test sample | Control sample 1 | Control sample 2 |
|---|---|---|---|
| Number of panelists | 9 | 1 | 0 |

As seen from Table 1, the test sample which is the edible material of the present invention is very suitable as an edible material having mouthfeel of the egg yolk of a hard-boiled egg in comparison with Comparative samples 1 and 2.

As described hereinabove, according to the present invention, an edible material having the pleasant mouthfeel of the egg yolk of a bard-boiled egg such as a mass of unbound fine granules, which is not at all soggy, and crumbles to pieces upon eating, is obtained at a low price by treating vegetable particles contained in individually separated intact cells with a protein insolubilizer. The edible material of the present invent has a low cholesterol content and is useful as a raw material for healthy food.

## Claims

1. An edible material comprising vegetable particles (A) surrounded with intact walls of individually separated vegetable cells and treated with a protein insolubilizer.

2. The edible material according to claim 1, wherein the protein insolubilizer is at least one member selected from alkaline earth metals, acids and organic solvents.

3. The edible material according to claim 2, wherein the acid is acetic acid, citric acid, malic acid, hydrochloric acid or lactic acid.

4. The edible material according to claim 2, wherein the acid is a dressing-type product containing at least one acid selected from acetic acid, citric acid, malic acid, hydrochloric acid and lactic acid.

5. The edible material according to claim 1, wherein the average particle size of the vegetable particles (A) is 50 to 500 µm.

6. The edible material according to claim 1, wherein the edible material contains 1 to 70 % of the vegetable particles (A) in terms of the dry weight.

7. The edible material according to claim 1, wherein vegetable is legume.

8. The edible material according to claim 7, wherein legume is soybeans.

9. The edible material according to claim 1, wherein the edible material further contains a yellow colorant.

10. A food product using the edible material according to any one of claims 1 to 9.

11. A food product according to claim 10 which is a salad.

12. A food product according to claim 10 which is a daily dish.
